(19) **Europäisches Patentamt**
**European Patent Office**
**Office européen des brevets**

(11) **EP 2 206 617 B1**

(12) **EUROPEAN PATENT SPECIFICATION**

(45) Date of publication and mention
of the grant of the patent:
**23.01.2013 Bulletin 2013/04**

(21) Application number: **08845936.7**

(22) Date of filing: **21.10.2008**

(51) Int Cl.:
***B60H 1/32*** *(2006.01)*    ***F02D 29/04*** *(2006.01)*
***F04B 49/06*** *(2006.01)*    ***F25B 27/00*** *(2006.01)*

(86) International application number:
**PCT/JP2008/069038**

(87) International publication number:
**WO 2009/057480 (07.05.2009 Gazette 2009/19)**

(54) **AIR CONDITIONER FOR VEHICLE**

KLIMAANLAGE FÜR EIN FAHRZEUG

CLIMATISEUR POUR VÉHICULE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **29.10.2007 JP 2007279939**

(43) Date of publication of application:
**14.07.2010 Bulletin 2010/28**

(73) Proprietor: **Sanden Corporation
Isesaki-shi
Gunma 372-8502 (JP)**

(72) Inventors:
• **HIGUCHI, Teruo
Sanden Corporation
Isesaki-shi
Gunma 372-8502 (JP)**

• **IMAI, Tomonori
Sanden Corporation
Isesaki-shi
Gunma 372-8502 (JP)**
• **SUZUKI, Kenichi
c/o Sanden Corporation
Isesaki-shi
Gunma 372-8502 (JP)**

(74) Representative: **Prüfer & Partner GbR
European Patent Attorneys
Sohnckestrasse 12
81479 München (DE)**

(56) References cited:
**EP-A1- 1 609 642    EP-A2- 1 437 245
GB-A- 2 217 876    JP-A- 2 049 938
JP-A- 2004 211 663    JP-A- 2006 001 505
US-A- 5 285 649    US-B1- 6 226 585**

## Description

Technical Field of the Invention

The present invention relates to an air conditioner for a vehicle, and specifically, to an air conditioner for a vehicle which can adequately calculate a torque of a compressor even when an engine rotational speed changes rapidly.

Background Art of the Invention

In an air conditioner for a vehicle having a refrigeration cycle which includes a compressor, a condenser and an evaporator for refrigerant, the torque of the compressor greatly influences the performance of the refrigeration cycle itself and the control performance of an engine of a vehicle as a drive source of the compressor. As a compressor used for a refrigeration cycle, a variable displacement compressor capable of broadly controlling cooling performance by an external signal has been utilized widely. For example, as shown in Patent document 1, in an externally controlling type variable displacement compressor performing a complicated control by an external electric signal, although the torque of the compressor varies in accordance with various drive conditions and the control system, in a variable displacement compressor driven by an engine, it has been difficult to predict the drive torque of the compressor which becomes a load of the engine.

On the other hand, in an air conditioner for a vehicle having a refrigeration cycle including a compressor, a condenser and an evaporator, the torque of the compressor is calculated, for example, based on the discharge pressure of refrigerant of the compressor (for example, Patent document 2). Further, the torque can also be calculated from a pressure difference between refrigerant discharge pressure and refrigerant suction pressure, or a displacement control signal of the compressor.

Further, the applicant of the present application previously proposes a method of torque calculation capable of estimating the compressor torque precisely by dividing means for estimating the torque into two means for a saturation region in which the discharge displacement of the variable displacement compressor becomes maximum and for a displacement control region in which the discharge displacement is not maximum (Patent document 3).

However, in a piston type externally controlling system variable displacement compressor which is a main type compressor at the present time, it has been clarified that since, as a method for maintaining the suction pressure at a target value, the suction pressure is detected, the discharge displacement of the compressor is changed by increasing/decreasing the pressure in a crank chamber and as a result, the cooling ability is controlled, in a case where an engine rotational speed changes rapidly, for example, such as an automatic shift down at the time of a rapid acceleration, the change of the discharge displacement of the compressor does not come up with it, and a good calculated torque such as that at a stable time cannot be obtained.

In Patent document 4, in order to correct a delay of the change of the discharge displacement of the compressor relative to the change of an external control signal, a method is proposed for controlling the torque to be controlled so as to approach an actual compressor drive torque by using a manner of a first-order lag, etc., but a rapid change of engine rotational speed is not considered.

In order to control the engine rotational speed stably, because a method, wherein, after the discharge displacement of a compressor has actually changed rapidly, a corrected compressor torque estimated value is fed back to an engine ECU (Electronic Control Unit), is complicated and includes indefinite items, actually a method is more practical for gradually changing the discharge displacement of the compressor and avoiding a rapid change of the compressor torque. Further, in use of a usual automobile, it is considered to be an important subject for power saving to improve the accuracy of estimation of the compressor torque at the time of change in engine rotational speed.

Patent document 1: JP-A-11-291751

Patent document 2: JP-A-2001-347828

Patent document 3: JP-A-2006-1505

Patent document 4: JP-A-2004-211663

Another air conditioner for a vehicle of a known type is disclosed by EP 1609642 A1.

Disclosure of the Invention

Problems to be solved by the Invention

Accordingly, an object of the present invention is to provide an air conditioner for a vehicle which can calculate a torque of a compressor in a refrigeration cycle adequately and precisely even when a rotational speed of an engine of the vehicle being a drive source of the compressor changes rapidly.

Means for solving the Problems

To achieve the above-described object, an air conditioner for a vehicle according to the present invention comprises at least a refrigeration cycle which includes a variable displacement compressor capable of varying a displacement for discharge of refrigerant which uses an engine as a drive source, a condenser for refrigerant, and an evaporator for refrigerant, a displacement adjustment means for outputting a displacement control signal to the compressor, and a compressor torque calculation means for calculating a torque of the compressor, in which the compressor torque calculation means includes at least two torque estimation means of a saturation region torque estimation means corresponding to a case where the compressor is driven at a maximum discharge displacement and a displacement control region torque estimation means corresponding to a case where the compressor is driven at a discharge displacement other than the maximum discharge displacement, and is characterized in that the compressor torque calculation means has a correction means for adding a correction corresponding to a response delay of the compressor and the refrigeration cycle to the calculation of the torque of the compressor when a change in engine rotational speed greater than a set value is detected. Where, the engine of a vehicle means a prime mover for running the vehicle, and it is a concept including an electric motor in a hybrid car or an electric car in addition to an internal combustion engine. In such an air conditioner for a vehicle, in particular, it is effective to add a correction to an estimated torque for the torque estimation means for the displacement control region which is not maximum in discharge displacement, when the change rate of the engine rotational speed exceeds the set value (rapid acceleration and rapid deceleration).

The above-described correction means preferably reads a correction coefficient for the compressor torque calculation from a map, which is made in advance by employing a rotational speed change rate, that is a difference between a rotational speed immediately before a time when the engine rotational speed changes and a rotational speed at a time when the engine rotational speed has changed after a predetermined sampling time has passed, and a correction coefficient predetermined in correspondence with the rotational speed change rate, as parameters, and adds the correction based on the correction coefficient read. In such a structure, the correction coefficient is read quickly and adequately, and based on the read correction coefficient, the torque of the compressor can be calculated and estimated precisely in accordance with the degree of the change in engine rotational speed. Further, in an actual operation condition, although there is a mode transferred from the saturation region exhibiting a maximum discharge displacement of the variable displacement compressor to the displacement control region in which the discharge displacement is not maximum in accordance with the change of the engine rotational speed, or a mode contrary thereto, because the operation mode of the variable displacement compressor is determined precisely by adequately selecting sampling times of various input signals (for example, 100 msec. or less), it is not necessary to make the torque estimation value calculation program complicated.

It is preferred that the above-described map is made as a map in which a plurality of characteristic lines, each determining a relationship between the rotational speed change rate and the correction coefficient, are set selectively by further employing a load to the refrigeration cycle as a parameter. As this load to the refrigeration cycle as a parameter, an outside air temperature or a pressure at a high-pressure side of the refrigeration cycle can be employed. Namely, the correction means selectively reads correction coefficients used for torque calculations at a time immediately before the change of engine rotational speed and at the time of the rotational speed change from a map made by employing a condition at the time immediately before the change of engine rotational speed (outside air temperature, high-pressure side pressure, etc.) and an engine rotational speed change rate as parameters, and performs the calculation of correction based on the map within the period of time specified beforehand.

By adding the above-described calculation of correction of the compressor torque, even in a case where the engine rotational speed changes rapidly and the change of discharge displacement of the compressor cannot follow it, it becomes possible to calculate the compressor torque as a more precise value in correspondence with the change of the engine rotational speed, and it becomes possible to utilize the precise compressor torque estimated value for control of the engine.

In an air conditioner for a vehicle adding such a correction calculation of a compressor torque, the following controls may be further added.

For example, it is possible that a smaller value among values calculated by the saturation region torque estimation means and the displacement control region torque estimation means is selected as a torque estimate.

Further, in the above-described air conditioner for a vehicle, a structure may be employed wherein the air conditioner further comprises an engine rotational speed detection means for detecting an engine rotational speed of a vehicle or referring to its signal, an outside air temperature detection means for detecting an outside air temperature, and a high pressure detection means for detecting a refrigerant pressure at a high-pressure side, the compressor is a variable displacement compressor capable of controlling a discharge displacement, and the displacement control region torque estimation means estimates the torque of the compressor based on at least a displacement control signal, the refrigerant pressure at the high-pressure side, the outside air temperature, and the engine rotational speed, and adds a correction determined by the correction means to the compressor torque calculation.

In this case, as the control system of the discharge displacement of the compressor, both of a system for controlling a refrigerant suction pressure (namely, a usual variable displacement compressor) and a system for controlling a pressure difference between a refrigerant discharge pressure and a refrigerant suction pressure can be used. Further, by detecting the refrigerant pressure at the high-pressure side in the above-described control, the following advantage can be obtained. Namely, immediately after the displacement control signal is changed, it takes a time more or less until the refrigerant pressure difference between at the high-pressure side and at a low-pressure side is stabilized. During this time, because the above-described pressure difference varies irrelevant to the value of the displacement control signal, there also occurs a variation in torque. Accordingly, by detecting the refrigerant pressure at the high-pressure side, a more precise torque estimation in correspondence with the pressure variation may be possible.

In such a constitution, a structure may be employed wherein the air conditioner further comprises means for detecting a physical amount having a correlation with an amount of air passing through the condenser, and the displacement control region torque estimation means estimates the torque of the compressor further referring to the physical amount having a correlation with an amount of air passing through the condenser.

Namely, although there are many vehicles in which gas volume of a fan for a condenser is controlled at an idling time and the like, in such a case, depending upon the variation of the gas volume of the condenser fan, the heat radiation ability at the air side of the condenser changes, and it gives a great influence to the accuracy of the torque estimation. Therefore, the accuracy of the estimation of the torque of the compressor can be improved by introducing the physical amount having a correlation with the amount of the air passing through the condenser, such as a voltage of the condenser fan, into the equation for torque estimation.

Further, a structure may be employed wherein the air conditioner further comprises means for detecting a physical amount having a correlation with an amount of air passing through the evaporator, and the displacement control region torque estimation means estimates the torque of the compressor further referring to the physical amount having a correlation with an amount of air passing through the evaporator.

Namely, if a thermal load to the evaporator becomes great, because a control for increasing the flow rate of refrigerant operates, the torque of the compressor also increases. Therefore, the accuracy of the estimation of the torque of the compressor can be improved by introducing the physical amount having a correlation with the amount of the air passing through the evaporator, such as a voltage of a blower, into the equation for torque estimation.

Further, a structure may be employed wherein the air conditioner further comprises a vehicle running speed recognition means for detecting a vehicle running speed or referring to its signal, and the displacement control region torque estimation means estimates the torque of the compressor further referring to the vehicle running speed

Namely, if the vehicle running speed changes, because a wind velocity at the front surface of the vehicle changes, the amount of air introduced into the condenser changes. Therefore, the amount of heat radiation at the air side of the condenser changes, and it gives a great influence to the accuracy of the torque estimation. Therefore, a precise torque estimation in consideration of the change of the front surface wind velocity becomes possible by introducing the vehicle running speed into the equation for torque estimation.

Further, a structure may also be employed wherein the air conditioner further comprises an engine rotational speed detection means for detecting an engine rotational speed of a vehicle or referring to its signal, a vehicle running speed recognition means for detecting a vehicle running speed or referring to its signal, an outside air temperature detection means for detecting an outside air temperature, and a high pressure detection means for detecting a refrigerant pressure at a high-pressure side, the compressor is a variable displacement compressor capable of controlling a discharge displacement, and the displacement control region torque estimation means estimates a power of the compressor based on at least a displacement control signal, the refrigerant pressure at the high-pressure side, the vehicle running speed and the outside air temperature, estimates the torque of the compressor from the engine rotational speed and the estimated power of the compressor, and adds a correction determined by the correction means to the compressor torque calculation.

Also in this case, as the control system of the discharge displacement of the compressor, both of a system for controlling a refrigerant suction pressure (namely, a usual variable displacement compressor) and a system for controlling a pressure difference between a refrigerant discharge pressure and a refrigerant suction pressure can be used. For example, in a case of the former system, namely, in a case using a variable displacement compressor capable of controlling a refrigerant suction pressure (namely, a usual variable displacement compressor), a pressure difference between the compressor discharge refrigerant and the suction refrigerant is calculated from the measured value of a high pressure detection means (a refrigerant pressure sensor at the high-pressure side) and the estimated value of the refrigerant suction pressure estimated from the displacement control signal, and the power is estimated from the pressure difference, the outside air temperature and the vehicle running speed. Thereafter, the torque can be calculated from an equation of torque = k x (power/rotational speed).

In this constitution, a structure may be employed wherein the air conditioner further comprises means for detecting a physical amount having a correlation with an amount of air passing through the condenser, and the displacement control region torque estimation means estimates the power of the compressor further referring to the physical amount having a correlation with an amount of air passing through the condenser, and estimates the torque of the compressor from the engine rotational speed and the estimated power of the compressor.

Namely, the correlation between the above-described pressure difference and the power is greatly influenced by the heat radiation ability at the air side of the condenser. Therefore, as a factor for recognizing a change of the amount of air passing through the condenser (wind velocity at the front surface of the condenser) greatly influencing the heat radiation ability at the air side of the condenser, the power is estimated referring to the voltage of a fan for the condenser, etc. Thereafter, the torque can be calculated by an equation of torque = k x (power/rotational speed).

Further, a structure may also be employed wherein the air conditioner further comprises means for detecting a physical amount having a correlation with an amount of air passing through the evaporator, and the displacement control region torque estimation means estimates the power of the compressor further referring to the physical amount having a correlation with an amount of air passing through the evaporator, and estimates the torque of the compressor from the engine rotational speed and the estimated power of the compressor.

Namely, if the thermal load at the evaporator becomes great, because the control for increasing the flow rate of refrigerant acts, the power of the compressor also increases. Therefore, the power is estimated referring to a physical amount having a correlation with the amount of air passing through the evaporator such as a voltage of a blower. Thereafter, the torque can be calculated by an equation of torque = k x (power/rotational speed).

Furthermore, a structure may employed wherein the air conditioner further comprises an engine rotational speed detection means for detecting an engine rotational speed of a vehicle or referring to its signal, and an outside air temperature detection means for detecting an outside air temperature, and the saturation region torque estimation means estimates the torque of the compressor based on at least the outside air temperature and the engine rotational speed, and adds a correction determined by the correction means to the compressor torque calculation.

Namely, because the torque does not change relative to a change of the displacement control signal in the saturation region, the torque is estimated using parameters other than the displacement control signal (outside air temperature, rotational speed, etc.).

In such a constitution, a structure may also be employed wherein the air conditioner further comprises means for detecting a physical amount having a correlation with an amount of air passing through the condenser, and the saturation region torque estimation means estimates the torque of the compressor further referring to the physical amount having a correlation with an amount of air passing through the condenser.

Namely, as aforementioned, at a time of idling, etc., in a case where an air amount of a condenser fan is controlled, the heat radiation ability at the air side of the condenser changes depending upon a change of the air amount of the condenser fan, and thereby greatly influencing the accuracy of torque estimation. Therefore, by introducing a physical amount having a correlation with an amount of air passing through the condenser such as a voltage of the condenser fan into the equation for torque estimation, the accuracy of torque estimation of the compressor can be improved.

Further, a structure may be employed wherein the air conditioner further comprises means for detecting a physical amount having a correlation with an amount of air passing through the evaporator, and the saturation region torque estimation means estimates the torque of the compressor further referring to the physical amount having a correlation with an amount of air passing through the evaporator.

Namely, if the thermal load at the evaporator becomes great, because the control for increasing the flow rate of refrigerant acts, the torque of the compressor also increases. Therefore, by introducing a physical amount having a correlation with an amount of air passing through the evaporator such as a voltage of the blower into the equation for torque estimation, the accuracy of torque estimation of the compressor can be improved.

Further, a structure may also be employed wherein the air conditioner further comprises a vehicle running speed recognition means for detecting a vehicle running speed or referring to its signal, and the saturation region torque estimation means estimates the torque of the compressor further referring to the vehicle running speed.

Namely, as aforementioned, if the vehicle running speed changes, because a wind velocity at the front surface of the vehicle changes, the amount of air introduced into the condenser changes. Therefore, the amount of heat radiation at the air side of the condenser changes, and it gives a great influence to the accuracy of the torque estimation. Therefore, a precise torque estimation in consideration of the change of the front surface wind velocity becomes possible by introducing the vehicle running speed into the equation for torque estimation.

Further, the saturation region torque estimation means may employ a certain predetermined value as a torque estimate. Namely, in the saturation region, because a condition is supposed where the discharge displacement of the compressor is a maximum displacement, there is no great torque variation. Therefore, it is possible that the saturation region torque estimation means decides the certain predetermined value as a torque estimate.

Further, a structure may also be employed wherein the saturation region torque estimation means leads a torque estimate by employing a torque estimation map in which a torque estimate is predetermined relative to an outside air temperature, an engine rotational speed or a vehicle running speed. Namely, it is possible to estimate the torque from a map determined by an experiment and the like in advance. This map is different from the aforementioned map for reading a correction coefficient.

The information of the torque estimate of the compressor calculated as described above may be sent to an engine control unit (an engine ECU). Namely, by communication of the torque estimate to the engine ECU, the vehicle can decide an optimum engine output.

Effect according to the Invention

In the air conditioner for a vehicle according to the present invention, in all regions including the saturation region where the discharge displacement of the variable displacement compressor becomes maximum and the displacement control region where the discharge displacement is not maximum, it becomes possible to estimate the compressor torque at a high accuracy, and even in a case where the rotational speed of an engine, which is a drive source of the compressor, changes rapidly, a high-accuracy compressor torque estimation becomes possible, and a more desirable control of an air conditioner for a vehicle becomes possible. Further, because the high-accuracy compressor torque estimation becomes possible, it becomes possible to aim a more optimum engine control.

Brief explanation of the drawings

[Fig. 1] Fig. 1 is a schematic diagram of an air conditioner for a vehicle according to an embodiment of the present invention.
[Fig. 2] Fig. 2 is a graph showing a relationship between a pressure difference between sucked refrigerant and discharged refrigerant of a compressor and a compressor torque.
[Fig. 3] Fig. 3 is a graph showing a relationship between a pressure difference between sucked refrigerant and discharged refrigerant of a compressor and a compressor power.
[Fig. 4] Fig. 4 is a graph showing a displacement control region and a saturation region.
[Fig. 5] Fig. 5 is a graph showing a torque estimate relative to a displacement control signal due to equations for displacement control region torque estimation and saturation region torque estimation.
[Fig. 6] Fig. 6 is a flowchart showing an example of a control according to the present invention.
[Fig. 7] Fig. 7 is a graph showing an example of a map indicating a relationship between a rotational speed change rate and a correction coefficient determined employing an outside air temperature as a parameter.
[Fig. 8] Fig. 8 is a graph showing an example indicating changes of respective items when an engine rotational speed is elevated.
[Fig. 9] Fig. 9 is a graph showing an example indicating changes of respective items when an engine rotational speed is lowered.
[Fig. 10] Fig. 10 (A) and (B) are distribution diagrams showing examples of maps of torque estimates in saturation region.

Explanation of symbols

1: air conditioner for vehicle
2: refrigeration cycle
3: variable displacement compressor
4: condenser
5: receiver drier
6: expansion mechanism (expansion valve)
7: evaporator
8: blower
9: air duct
10: air suction port for air conditioning
11: heater unit
12: air mixing damper
13: air temperature sensor at exit of evaporator
14: air conditioning control unit
15: group of signals
16: engine ECU
17, 18, 19: air discharge port
20: displacement control signal
21: information of torque estimate
100: engine

The Best mode for carrying out the Invention

Hereinafter, desirable embodiments of the present invention will be explained referring to the drawings.

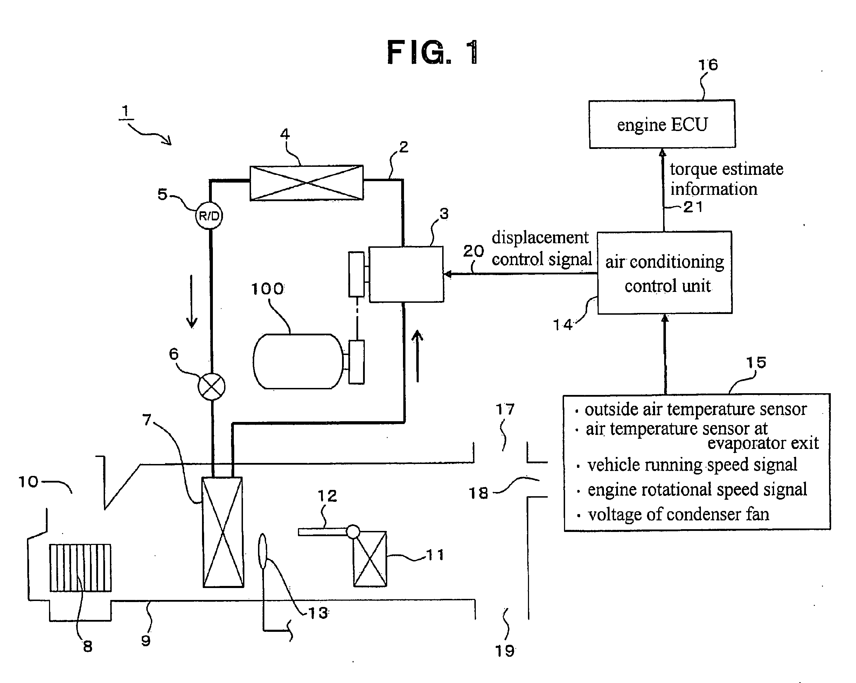

Fig. 1 depicts an air conditioner for a vehicle 1 according to an embodiment of the present invention. In Fig. 1, a variable displacement compressor 3, which is driven by an engine 100 of a vehicle and whose discharge displacement can be varied, is provided in refrigeration cycle 2, and the drive force of engine 100 is transmitted, for example, through an electromagnetic clutch, etc. Refrigerant is circulated in the tube of refrigeration cycle 2, and the high-temperature and high-pressure refrigerant compressed by the above-described compressor 3 is cooled by heat exchange with outside air at a condenser 4, and condensed and liquefied. Gas and liquid are separated by a receiver drier 5, and the liquid refrigerant is expanded and reduced in pressure by an expansion mechanism 6 (expansion valve). The low-pressure refrigerant reduced in pressure flows into an evaporator 7, and is heat exchanged with air sent by a blower 8. The refrigerant evaporated and gasified at evaporator 7 is sucked into compressor and compressed again.

Blower 8 is disposed in an air duct 9 through which air for air conditioning in a vehicle interior passes, and air sucked from an air suction port for air conditioning 10 is sent to evaporator 7 by blower 8. A part of the air having passed through evaporator 7 is sent to a heater unit 11 disposed at a downstream position, and the rate between the amount of air to be passed through heater unit 11 and the amount of air to be bypassed is adjusted by an air mixing damper 12. In this embodiment, an air temperature sensor at evaporator exit 13 is provided at the exit side of evaporator 7 for detecting the temperature of the air after passing through the evaporator, and the detected signal is inputted to an air conditioning control unit 14 performing the air conditioning. In this air conditioning control unit 14, the saturation region torque estimation means and the displacement control region torque estimation means for compressor 3 and the correction means for performing a correction of the compressor torque calculation according to the present invention are incorporated, and the air conditioning control unit 14 also functions as a control unit for performing the entire air conditioning control in this embodiment.

To this air conditioning control unit 14, various kinds of signals are inputted except the detection signal due to the above-described air temperature sensor at evaporator exit 13. In this embodiment, a group of signals 15 of at least an outside air temperature detection signal from an outside air temperature sensor, a detection signal due to the above-described air temperature sensor at evaporator exit 13, a vehicle running speed signal, an engine rotational speed signal, a voltage signal of a condenser fan as a physical amount having a correlation with the amount of air passing through the condenser, etc. are inputted to air conditioning control unit 14, and from the air conditioning control unit 14, a displacement control signal 20 is outputted to variable displacement compressor 3 and an information of torque estimate calculated and added with correction by the correction means is sent to an engine ECU 16.

Respective discharge ports 17, 18 and 19 such as DEF, VENT and FOOT are provided at positions downstream air duct 9, and a discharge port or discharge ports to be used are selected by respective dampers which are omitted to be depicted.

In air conditioner for a vehicle 1 thus constructed, the control according to the present invention is carried out as follows. First, basic system for the compressor torque calculation in the above-described embodiment will be explained, and next, the calculation for correction characterized by the present invention will be explained.

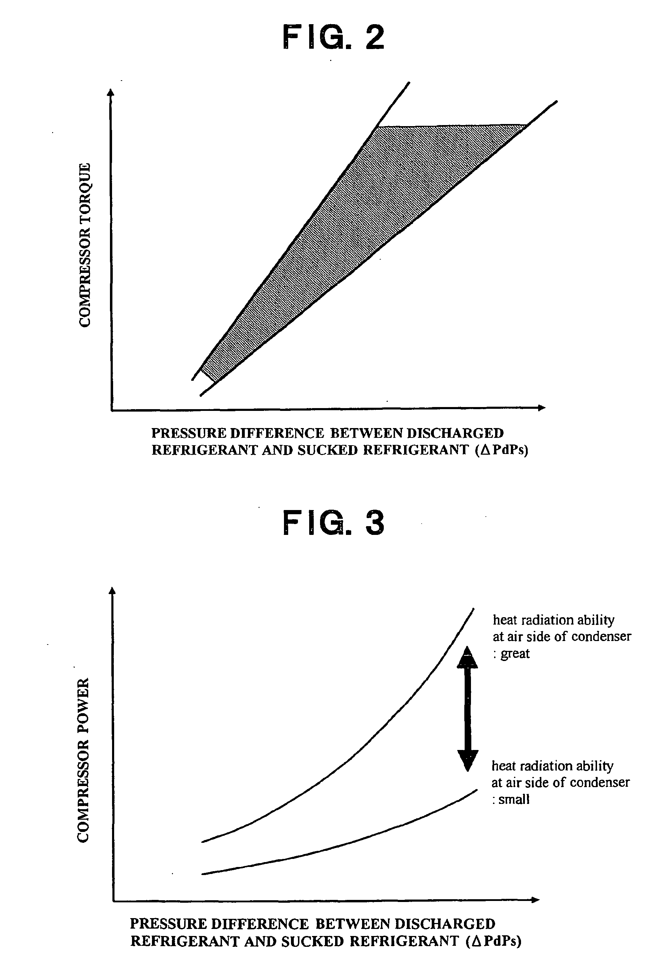

Fig. 2 shows a relationship between a pressure difference Δ PdPs between sucked refrigerant and discharged refrigerant of a compressor and a compressor torque, that has been investigated by an experiment, and measured values of the two values are distributed within the oblique line region in the figure. At which position in the oblique line region a stabilized state can be realized, is decided mainly by the rotational speed of the compressor and the heat radiation ability at the air side of the condenser. Because the heat radiation ability at the air side of the condenser is greatly influenced by an outside air temperature, a wind velocity at a front surface of a vehicle and a voltage of a condenser fan, by introducing these items into the equation for torque estimation, a more accurate torque estimation becomes possible.

Further, in the present invention, as aforementioned, the compressor torque can also be calculated (estimated) after the compressor power is directly calculated. Fig. 3 shows a relationship between a pressure difference (Δ PdPs) between sucked refrigerant and discharged refrigerant of a compressor and a compressor power, that has been investigated by an experiment, for reference in such a case. As shown in the figure, the compressor power relative to the pressure difference (Δ PdPs) is greatly influenced by the heat radiation ability at the air side of the condenser.

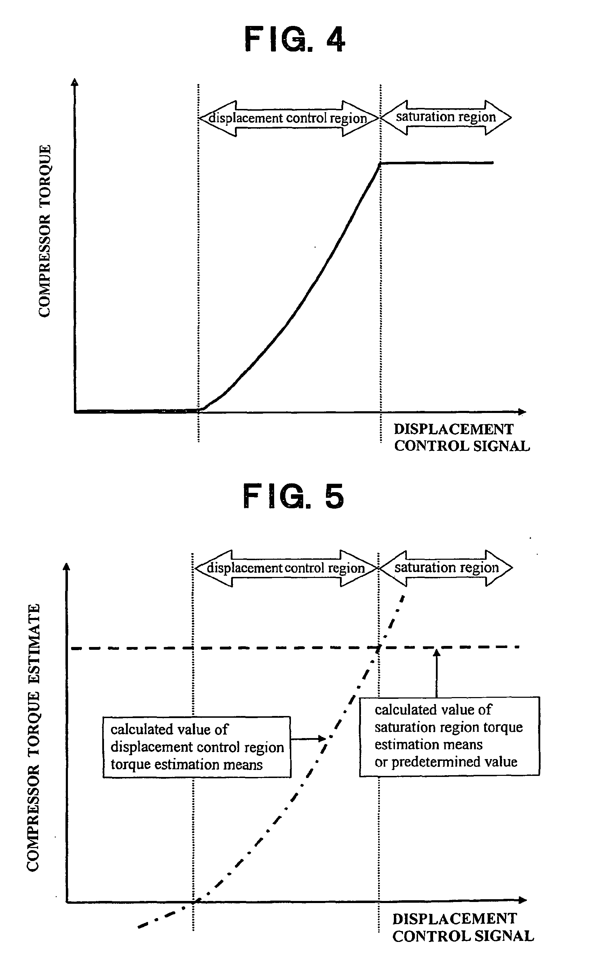

Fig. 4 shows a relationship between a displacement control signal and a compressor torque. Depicted are a displacement control region (a region where the compressor torque changes depending upon the displacement control signal) and a saturation region (a region where, when the displacement control signal is changed toward a direction in which the discharge displacement increases, the discharge displacement becomes maximum at a certain point, and even if thereafter the displacement control signal is changed toward the direction in which the discharge displacement increases, the torque does not change). In this saturation region, the compressor torque does not change as it is left at a condition indicating the maximum value, even if the displacement control signal is changed toward the direction in which the discharge displacement increases.

Fig. 5 shows an example of estimation of compressor torque relative to the above-described displacement control region and saturation region, and depicts a calculated value by an equation for torque estimation in the displacement control region (calculated value due to the displacement control region torque estimation means) and a calculated value by an equation for torque estimation in the saturation region (calculated value due to the saturation region torque estimation means). As shown in Fig. 5, a high-accuracy torque estimation becomes possible in any of the displacement control region and the saturation region by selecting a smaller calculated value in the entire region.

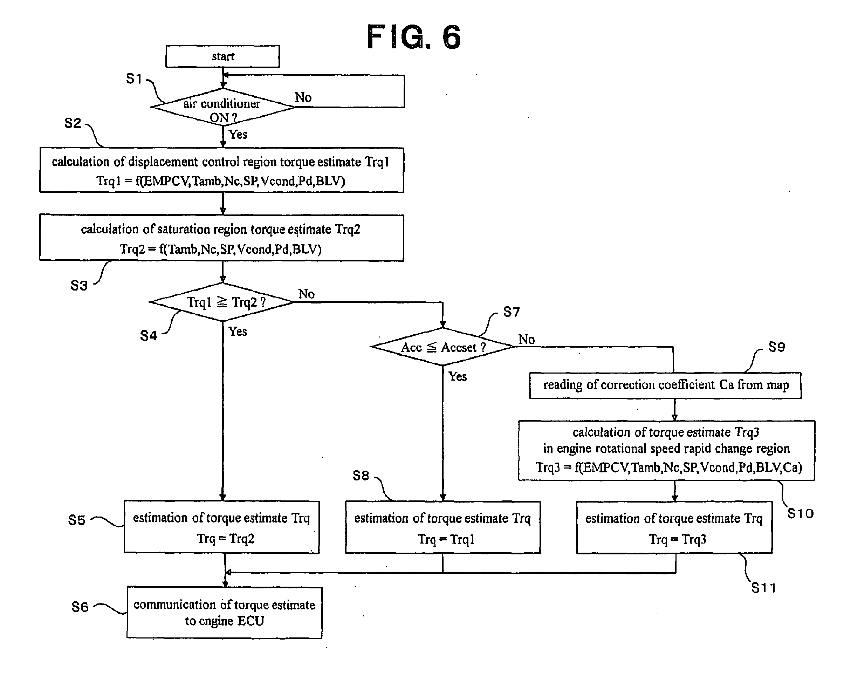

Fig. 6 is a flowchart showing an example of the above-described calculation of the compressor torque, in particular, an example of the compressor torque calculation added with the correction calculation according to the present invention.

It is determined whether the air conditioner is ON (air conditioning control is ON) at step S1, and in case of air conditioner ON, at step S2, first, a calculated value Trq1 is calculated by the displacement control region torque estimation means. Where, as the method for calculation of Trq1, there are the following two methods.

(1) Method for directly calculating the torque:
Trq1=f(EMPCV, Tamb, Nc, SP, Vcond, Pd, BLV)
Where, EMPCV: displacement control signal, Tamb: outside air temperature [°C], Nc: compressor rotational speed or engine rotational speed [rpm], SP: vehicle running speed [km/h], Vcond: voltage of condenser fan [V], Pd: refrigerant pressure at high-pressure side [MPa], and BLV: voltage of blower [V].

(2) Method for calculating the torque after directly calculating the power (PW): PW-f(EMPCV, Tamb, Nc, SP, Vcond, Pd, BLV)

$$Trq1 = k * PW/Nc$$

Where, k is a coefficient.

Further, at step S3, a value Trq2 is calculated by the following equation by the saturation region torque estimation means.

$$Trq2 = f(Tamb,\ Nc,\ SP,\ Vcond,\ Pd,\ BLV)$$

Where, Trq2 may be predetermined value K decided in advance, as aforementioned.

$$Trq2 = K$$

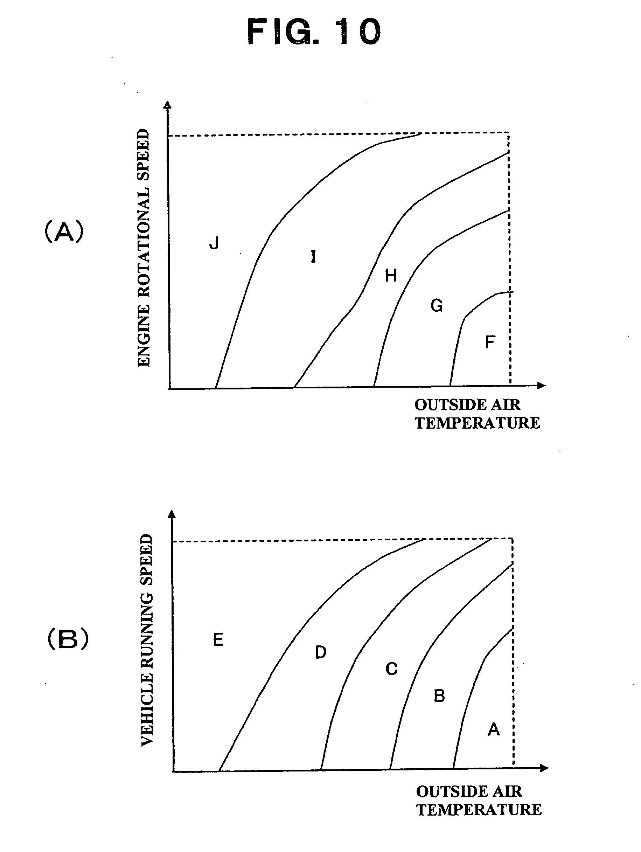

Further, as shown in Fig. 10, the Trq2 may be calculated using a map which determines torque estimates F-J or A-E in accordance with values of outside air and engine rotational speed (Fig. 10(A)) or values of outside air and vehicle running speed (Fig. 10(B)).

In Fig. 6, after calculation of Trq1 and Trq2, it is determined which of Trq1 and Trq2 is greater at step S4. In case of Trq1 $\geqq$ Trq2, the saturation region torque calculated value Trq2, which is a smaller value, is employed as a torque estimate Trq (step S5), and 6). Referring to this output value, an optimum engine operation can be decided in accordance with the compressor torque (or power) in the air conditioner at that time, and a more desirable air conditioning control can be realized.

In case where it is determined to be Trq1<Trq2 at step S4, at step S7 it is determined with greatness between an engine rotational speed change rate Acc (a difference between a rotational speed immediately before an engine rotational speed changes and a rotational speed at the time when the engine rotational speed has changed after a predetermined sampling time (for example, 100 msec or less) has expired) and a predetermined upper limit of the change rate Accset, and in case of Acc $\leqq$ Accset, at step S8 the Trq already calculated as a torque estimate Trq is employed, and it is outputted to the engine ECU (step S6).

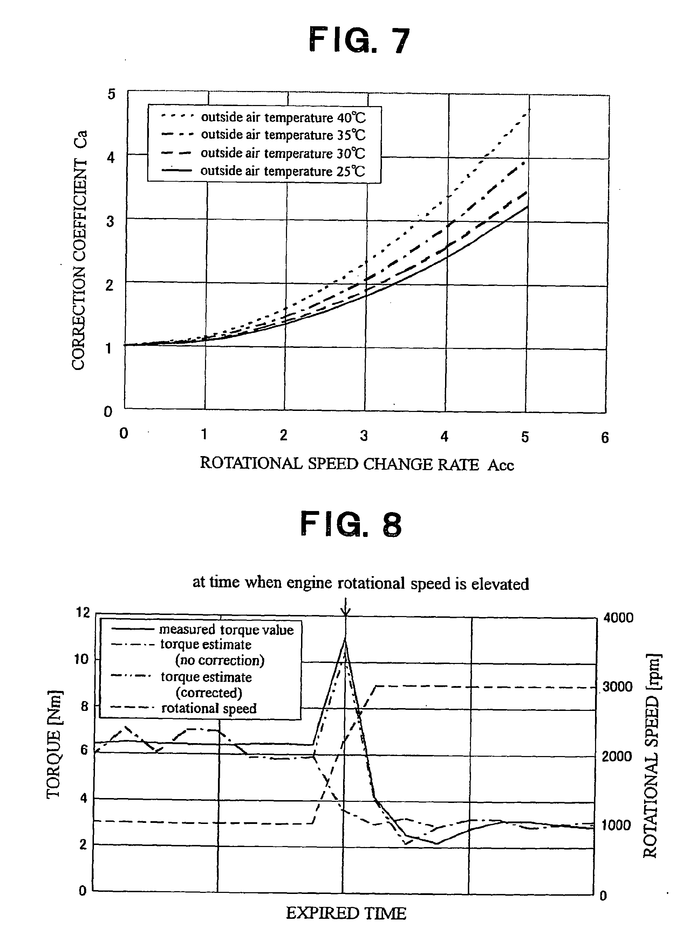

In case where at step S7 it is determined that the engine rotational speed rapidly changes, that is, to be Acc>Accset, correction calculation using the correction coefficient according to the present invention is carried out. First, at step S9, a correction coefficient Ca in correspondence with the engine rotational speed change rate Acc at that time is read from a predetermined map. This map is prepared in advance, for example, as shown in Fig. 7, and it is stored in memory. In the example shown in Fig. 7, the correction coefficient Ca is determined in advance by employing the outside air temperature as a parameter in correspondence with the engine rotational speed change rate, and from this map prepared in advance, the correction coefficient Ca for calculation of the compressor torque is read. A pressure at the high-pressure side of refrigeration cycle 2 may be employed as the parameter instead of the outside air temperature or together with the outside air temperature. Using the read correction coefficient Ca, the calculation of a compressor torque estimate in the engine rotational speed rapid change region is performed at a condition being added with the correction (step S10), and this torque estimate Trq3 is employed as the compressor torque estimate Trq at that time (step S11), and it outputted to the engine ECU (step S6).

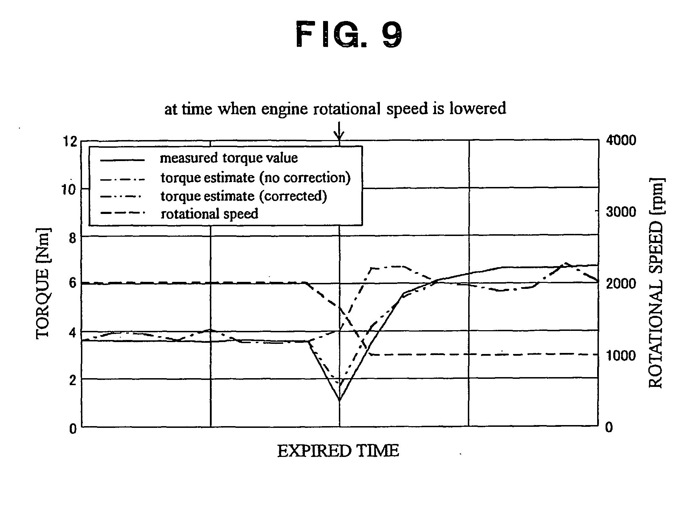

By performing such a correction calculation in consideration of a rapid change of engine rotational speed, for example, remarkable advantages as shown in Figs. 8 and 9 are obtained. Fig. 8 shows an actually measured compressor torque value, a torque estimate without the above-described correction, and a torque estimate with the above-described correction, respectively, in case where an engine rotational speed is rapidly elevated, in correspondence with the change of the engine rotational speed. Fig. 9 shows an actually measured compressor torque value, a torque estimate without the above-described correction, and a torque estimate with the above-described correction, respectively, in case where an engine rotational speed is rapidly lowered, in correspondence with the change of the engine rotational speed. As is explicit from Figs. 8 and 9, it is understood that, by adding the correction according to the present invention, the torque estimate becomes closer to an actual torque (a measured torque), and even in a case where the control of the discharge displacement of the compressor does not follow the rapid change of the engine rotational speed, the compressor torque may be calculated and estimated accurately. Further, by sending the information of this accurately estimated compressor torque value to the engine ECU, a more optimum engine control in correspondence with a load at that time becomes possible.

Industrial Applications of the Invention

The control in the air conditioner for a vehicle according to the present invention can be applied to any air conditioner for a vehicle having a refrigeration cycle with a variable displacement compressor, and by estimating the compressor torque more accurately, a more desirable air conditioning and a more desirable engine control can be realized.

## Claims

1. An air conditioner for a vehicle (1) comprising at least a refrigeration cycle (2) which includes a variable displacement compressor (3) capable of varying a displacement for discharge of refrigerant which uses an engine (100) as a drive source, a condenser (4) for refrigerant, and an evaporator (7) for refrigerant, a displacement adjustment means for outputting a displacement control signal (20) to said compressor (3) and a compressor torque calculation means for calculating a torque of said compressor (3), in which said compressor torque calculation means includes at least two torque estimation means of a saturation region torque (Trq 2) estimation means (S3) corresponding to a case where said compressor (3) is driven at a maximum discharge displacement and a displacement control region torque (Trq1) estimation means (S2) corresponding to a case where said compressor (3) is driven at a discharge displacement other than said maximum discharge displacement, **characterized in that** said compressor torque calculation means has a correction means (S9) for adding a correction (C2) corresponding to a response delay of said compressor (3) and said refrigeration cycle to said calculation of said torque of said compressor when a change in engine rotational speed (Acc) greater than a set value (Accset) is detected.

2. The air conditioner for a vehicle according to claim 1, wherein said correction means (S9) reads a correction coefficient (C2) for said compressor torque calculation from a map, which is made in advance by employing a rotational speed change rate, that is a difference between a rotational speed immediately before a time when said engine (100) rotational speed changes and a rotational speed at a time when said engine (100) rotational speed has changed after a predetermined sampling time has passed, and a correction coefficient (C2) predetermined in correspondence with said rotational speed change rate, as parameters, and adds said correction based on said correction coefficient (C2) read.

3. The air conditioner for a vehicle according to claim 2, wherein said map is made as a map in which a plurality of characteristic lines, each determining a relationship between said rotational speed change rate (Acc) and said correction coefficient (C2), are set selectively by further employing a load to said refrigeration cycle as a parameter.

4. The air conditioner for a vehicle according to claim 3, wherein said load to said refrigeration cycle employed as said parameter is an outside air temperature (Tamb).

5. The air conditioner for a vehicle according to claim 3, wherein said load to said refrigeration cycle employed as said parameter is a pressure (Pd) at a high-pressure side of said refrigeration cycle.

6. The air conditioner for a vehicle according to claim 1, wherein a smaller value among values calculated by said saturation region torque estimation means (S3) and said displacement control region torque estimation means (S2) is selected as a torque estimate (S6).

7. The air conditioner for a vehicle according to claim 1, wherein said air conditioner further comprises an engine (100) rotational speed (Nc) detection means for detecting an engine (100) rotational speed of a vehicle or referring to its signal, an outside air temperature detection means for detecting an outside air temperature (Tamb), and a high pressure detection means for detecting a refrigerant pressure at a high-pressure side (Pd), said compressor (3) is a variable displacement compressor capable of controlling a discharge displacement (EMPCV), and said displacement control region torque estimation means (S2) estimates said torque of said compressor (3) based on at least a displacement control signal (EMPCV), said refrigerant pressure at said high-pressure side (Pd), said outside air temperature (Tamb), and said engine rotational speed (Nc), and adds a correction (C2) determined by said correction means to said compressor torque calculation.

8. The air conditioner for a vehicle according to claim 7, wherein said air conditioner further comprises means for detecting a physical amount (Vcond) having a correlation with an amount of air passing through said condenser (4), and said displacement control region torque estimation means (S2), estimates said torque of said compressor further referring to said physical amount (Vcond) having a correlation with an amount of air passing through said condenser (4).

9. The air conditioner for a vehicle according to claim 7, wherein said air conditioner further comprises means for detecting a physical amount (BLV) having a correlation with an amount of air passing through said evaporator (7), and said displacement control region torque estimation means (S2) estimates said torque of said compressor further referring to said physical amount (BLV) having a correlation with an amount of air passing through said evaporator (7).

10. The air conditioner for a vehicle according to claim 7, wherein said air conditioner further comprises a vehicle running speed (SP) recognition means for detecting a vehicle running speed or referring to its signal, and said displacement control region torque estimation means (S2) estimates said torque of said compressor further referring to said vehicle running speed (SP).

11. The air conditioner for a vehicle according to claim 1, wherein said air conditioner further comprises an engine rotational speed (Nc) detection means for detecting an engine (100) rotational speed of a vehicle or referring to its signal, a vehicle running speed (SP) recognition means for detecting a vehicle running speed or referring to its signal, an outside air temperature (Tamb) detection means for detecting an outside air temperature, and a high pressure (Pd) detection means for detecting a refrigerant pressure at a high-pressure side, said compressor (3) is a variable displacement compressor capable of controlling a discharge displacement (EMPCV), and said displacement control region torque estimation means (S2) estimates a power of said compressor (3) based on at least a displacement control signal (EMPCV), said refrigerant pressure at said high-pressure side (Pd), said vehicle running speed (SP) and said outside air temperature (Tamb), estimates said torque of said compressor from said engine rotational speed (Nc) and said estimated power of said compressor, and adds a correction (C2) determined by said correction means to said compressor torque calculation.

12. The air conditioner for a vehicle according to claim 11, wherein said air conditioner further comprises means for detecting a physical amount (Vcond) having a correlation with an amount of air passing through said condenser (4), and said displacement control region torque estimation means (S2) estimates said power of said compressor (3) further referring to said physical amount (Vcond) having a correlation with an amount of air passing through said condenser (4), and estimates said torque of said compressor (3) from said engine rotational speed (Nc) and said estimated power of said compressor.

13. The air conditioner for a vehicle according to claim 11, wherein said air conditioner further comprises means for detecting a physical amount (BLV) having a correlation with an amount of air passing through said evaporator (7) and said displacement control region torque estimation means (S2) estimates said power of said compressor further referring to said physical amount (BLV) having a correlation with an amount of air passing through said evaporator (7), and estimates said torque of said compressor (3) from said engine rotational speed (Nc) and said estimated power of said compressor.

14. The air conditioner for a vehicle according to claim 1, wherein said air conditioner further comprises an engine (100) rotational speed detection means for detecting an engine rotational speed (Nc) of a vehicle or referring to its signal, and an outside air temperature detection means (Tamb) for detecting an outside air temperature, and said saturation region torque estimation means (S3) estimates said torque of said compressor (3) based on at least said outside air temperature (Tamb) and said engine rotational speed (Nc), and adds a correction (C2) determined by said correction means to said compressor torque calculation.

15. The air conditioner for a vehicle according to claim 14, wherein said air conditioner further comprises means for detecting a physical amount (Vcond) having a correlation with an amount of air passing through said condenser (4), and said saturation region torque estimation means (S3) estimates said torque of said compressor (3) further referring to said physical amount (Vcond) having a correlation with an amount of air passing through said condenser (4).

16. The air conditioner for a vehicle according to claim 14, wherein said air conditioner further comprises means for detecting a physical amount (BLV) having a correlation with an amount of air passing through said evaporator (7), and said saturation region torque estimation means (S2) estimates said torque of said compressor (3) further referring to said physical amount (BLV) having a correlation with an amount of air passing through said evaporator (7),

17. The air conditioner for a vehicle according to claim 14, wherein said air conditioner further comprises a vehicle running speed (SP) recognition means for detecting a vehicle running speed (SP) or referring to its signal, and said saturation region torque estimation means (S3) estimates said torque of said compressor further referring to said vehicle running speed (SP).

18. The air conditioner for a vehicle according to claim 1, wherein said saturation region torque estimation means (S3) employs a certain predetermined value as a torque estimate.

19. The air conditioner for a vehicle according to claim 1, wherein said saturation region torque estimation means (S3) leads a torque estimate by employing a torque estimation map in which a torque estimate is predetermined relative to an outside air temperature (Tamb), an engine rotational speed (Nc) or a vehicle running speed (SP).

20. The air conditioner for a vehicle according to claim 1, wherein an information of a calculated torque estimate is sent to an engine control unit (S6).

## Patentansprüche

1. Klimaanlage für ein Fahrzeug (1), aufweisend zumindest einen Kühlkreislauf (2), der einen Kompressor (3) mit variabler Verdrängung, der in der Lage ist, eine Verdrängung zum Ausstoßen von Kältemittel zu verändern, und der einen Motor (100) als eine Antriebsquelle nutzt, einen Kondensator (4) für Kältemittel, und einen Verdampfer (7) für Kältemittel, ein Verdrängungseinstellmittel zum Ausgeben eines Verdrängungssteuerungssignals (20) zu dem Kompressor (3) und ein Kompressordrehmomentberechnungsmittel zum Berechnen eines Drehmoments des Kompressors (3) aufweist, in dem das Kompressordrehmomentberechnungsmittel mindestens zwei Drehmomentabschätzmittel enthält, ein Sättigungsbereichdrehmoment (Trq2) -Abschätzmittel (S3), das einem Fall zugeordnet ist, in dem der Kompressor (3) bei einer maximalen Ausstoßverdrängung angetrieben wird, und ein Verdrängungssteuerungsbereichdrehmoment (Trq1) -Abschätzmittel (S2), das einem Fall zugeordnet ist, in dem der Kompressor (3) bei einer Ausstoßverdrängung angetrieben wird, die nicht die maximale Ausstoßverdrängung ist,
   **dadurch gekennzeichnet, dass**
   das Kompressordrehmomentberechnungsmittel ein Korrekturmittel (S9) zum Addieren einer Korrektur (Ca) entsprechend einer Reaktionsverzögerung des Kompressors (3) und des Kühlkreislaufs zu der Berechnung des Drehmoments des Kompressors, wenn eine Änderung der Motordrehzahl (Acc) erfasst wird, die größer als ein eingestellter Wert (Accset) ist, hat.

2. Klimaanlage für ein Fahrzeug gemäß Anspruch 1, wobei das Korrekturmittel (S9) einen Korrekturkoeffizienten (Ca) für die Kompressordrehmomentberechnung aus einem Speicherabbild, das im Voraus durch Verwenden einer Drehzahländerungsrate, die eine Differenz ist zwischen einer Drehzahl unmittelbar vor einem Zeitpunkt, zu dem sich die Motor (100) -Drehzahl ändert, und einer Drehzahl zu einem Zeitpunkt, zu dem sich die Motor (100) -Drehzahl geändert hat nachdem eine vorbestimmte Abtastzeit verstrichen ist, und einen Korrekturkoeffizienten (Ca), der entsprechend der Drehzahländerungsrate vorbestimmt ist, erstellt wird, als Parameter ausliest und die Korrektur basierend auf dem ausgelesenen Korrekturkoeffizienten (Ca) addiert.

3. Klimaanlage für ein Fahrzeug gemäß Anspruch 2, wobei das Speicherabbild als ein Speicherabbild erstellt ist, in dem eine Mehrzahl von charakteristischen Linien, von denen jede ein Verhältnis zwischen der Drehzahländerungsrate (Acc) und dem Korrekturkoeffizienten (Ca) bestimmt, bei einem weiteren Aufbringen einer Last auf den Kühlkreislauf wahlweise als ein Parameter eingestellt werden.

4. Klimaanlage für ein Fahrzeug gemäß Anspruch 3, wobei die als der Parameter auf den Kühlkreislauf aufgebrachte Last eine Außenlufttemperatur (Tamb) ist.

5. Klimaanlage für ein Fahrzeug gemäß Anspruch 3, wobei die als der Parameter auf den Kühlkreislauf aufgebrachte Last ein Druck (Pd) auf einer Hochdruckseite des Kühlkreislaufs ist.

6. Klimaanlage für ein Fahrzeug gemäß Anspruch 1, wobei ein kleinerer Wert von durch das Sättigungsbereichdrehmomentabschätzmittel (S3) und durch das Verdrängungssteuerungsbereichdrehmoment-Abschätzmittel (S2) berechneten Werten als ein abgeschätztes Drehmoment (S6) ausgewählt wird.

7. Klimaanlage für ein Fahrzeug gemäß Anspruch 1, wobei die Klimaanlage ferner ein Motor (100) -Drehzahl (Nc) -Erfassungsmittel zum Erfassen einer Motor (100) -Drehzahl eines Fahrzeugs oder zum Bezug auf ihr Signal, ein Außenlufttemperaturerfassungsmittel zum Erfassen einer Außenlufttemperatur (Tamb), und ein Hochdruckerfassungsmittel zum Erfassen eines Kältemitteldrucks auf einer Hochdruckseite (Pd) aufweist, der Kompressor (3) ein Kompressor mit variabler Verdrängung ist, der in der Lage ist eine Ausstoßverdrängung (EMPCV) zu steuern, und das Verdrängungssteuerungsbereichdrehmomentabschätzmittel (S2) das Drehmoment des Kompressors (3) basierend auf zumindest einem Verdrängungssteuerungssignal (EMPCV), dem Kältemitteldruck auf der Hochdruckseite (Pd), der Außenlufttemperatur (Tamb) und der Motordrehzahl (Nc) abschätzt, und eine durch das Korrekturmittel bestimmte Korrektur (Ca) zu der Kompressordrehmomentberechnung addiert.

8. Klimaanlage für ein Fahrzeug gemäß Anspruch 7, wobei die Klimaanlage ferner ein Mittel zum Erfassen einer physikalischen Größe (Vcond), die auf eine Luftmenge, die durch den Kondensator (4) geht, verweist, aufweist, und das Verdrängungssteuerungsbereichdrehmomentabschätzmittel (S2) das Drehmoment des Kompressors ferner bezogen auf die physikalische Größe (Vcond), die auf eine Luftmenge, die durch den Kondensator (4) geht, verweist, abschätzt.

9. Klimaanlage für ein Fahrzeug gemäß Anspruch 7, wobei die Klimaanlage ferner ein Mittel zum Erfassen einer physikalischen Größe (BLV), die auf eine Luftmenge, die durch den Verdampfer (7) geht, verweist, aufweist, und das Verdrängungssteuerungsbereichdrehmomentabschätzmittel (S2) das Drehmoment des Kompressors ferner bezogen auf die physikalische Größe (BLV), die auf eine Luftmenge, die durch den Verdampfer (7) geht, verweist, abschätzt.

10. Klimaanlage für ein Fahrzeug gemäß Anspruch 7, wobei die Klimaanlage ferner ein Fahrzeuggeschwindigkeit (SP) -Erkennungsmittel zum Erfassen einer Fahrzeuggeschwindigkeit oder zum Bezug auf ihr Signal aufweist, und das Verdrängungssteuerungsbereichdrehmomentabschätzmittel (S2) das Drehmoment des Kompressors ferner bezogen auf die Fahrzeuggeschwindigkeit (SP) abschätzt.

11. Klimaanlage für ein Fahrzeug gemäß Anspruch 1, wobei die Klimaanlage ferner ein Motordrehzahl (Nc) -Erfassungsmittel zum Erfassen einer Motor (100) -Drehzahl eines Fahrzeugs oder zum Bezug auf ihr Signal, ein Fahrzeuggeschwindigkeit (SP) -Erkennungsmittel zum Erfassen einer Fahrzeuggeschwindigkeit oder zum Bezug auf ihr Signal, ein Außenlufttemperatur (Tamb) -Erfassungsmittel zum Erfassen einer Außenlufttemperatur und ein Hochdruck (Pd) -Erfassungsmittel zum Erfassen eines Kältemitteldrucks auf einer Hochdruckseite aufweist, der Kompressor (3) ein Kompressor mit variabler Verdrängung ist, der in der Lage ist, eine Ausstoßverdrängung (EMPCV) zu steuern, und das Verdrängungssteuerungsbereichdrehmomentabschätzmittel (S2) eine Leistung des Kompressors (3) basierend auf zumindest einem Verdrängungssteuerungssignal (EMPCV), dem Kältemitteldruck auf der Hochdruckseite (Pd), der Fahrzeuggeschwindigkeit (SP) und der Außenlufttemperatur (Tamb) abschätzt, das Drehmoment des Kompressors aus der Motordrehzahl (Nc) und der abgeschätzten Leistung des Kompressors abschätzt, und eine durch das Korrekturmittel bestimmte Korrektur (Ca) zu der Kompressordrehmomentberechnung addiert.

12. Klimaanlage für ein Fahrzeug gemäß Anspruch 11, wobei die Klimaanlage ferner ein Mittel zum Erfassen einer physikalischen Größe (Vcond), die auf eine Luftmenge, die durch den Kondensator (4) geht, verweist, aufweist, und das Verdrängungssteuerungsbereichdrehmomentabschätzmittel (S2) die Leistung des Kompressors (3) ferner bezogen auf die physikalische Größe (Vcond), die auf eine Luftmenge, die durch den Kondensator (4) geht, verweist, abschätzt, und das Drehmoment des Kompressors (3) aus der Motordrehzahl (Nc) und der abgeschätzten Leistung des Kompressors abschätzt.

13. Klimaanlage für ein Fahrzeug gemäß Anspruch 11, wobei die Klimaanlage ferner ein Mittel zum Erfassen einer physikalischen Größe (BLV), die auf eine Luftmenge, die durch den Verdampfer (7) geht, verweist, aufweist, und das Verdrängungssteuerungsbereichdrehmomentabschätzmittel (S2) die Leistung des Kompressors ferner bezogen auf die physikalische Größe (BLV), die auf eine Luftmenge, die durch den Verdampfer (7) geht, verweist, abschätzt, und das Drehmoment des Kompressors (3) aus der Motordrehzahl (Nc) und der abgeschätzten Leistung des Kompressors abschätzt.

14. Klimaanlage für ein Fahrzeug gemäß Anspruch 1, wobei die Klimaanlage ferner ein Motor (100) -Drehzahlerfassungsmittel zum Erfassen einer Motordrehzahl (Nc) eines Fahrzeugs oder zum Bezug auf ihr Signal, und ein Außenlufttemperaturerfassungsmittel (Tamb) zum Erfassen einer Außenlufttemperatur aufweist, und das Sättigungsbereichdrehmomentabschätzmittel (S3) das Drehmoment des Kompressors (3) basierend auf zumindest der Außenlufttemperatur (Tamb) und der Motordrehzahl (Nc) abschätzt, und eine durch das Korrekturmittel bestimmte Korrektur (Ca) zu der Kompressordrehmomentberechnung addiert.

15. Klimaanlage für ein Fahrzeug gemäß Anspruch 14, wobei die Klimaanlage ferner ein Mittel zum Erfassen einer physikalischen Größe (Vcond), die auf eine Luftmenge, die durch den Kondensator (4) geht, verweist, aufweist, und das Sättigungsbereichdrehmomentabschätzmittel (S3) das Drehmoment des Kompressors (3) ferner bezogen auf die physikalische Größe (Vcond), die auf eine Luftmenge, die durch den Kondensator (4) geht, verweist, abschätzt.

16. Klimaanlage für ein Fahrzeug gemäß Anspruch 14, wobei die Klimaanlage ferner ein Mittel zum Erfassen einer physikalischen Größe (BLV), die auf eine Luftmenge, die durch den Verdampfer (7) geht, verweist, aufweist, und das Sättigungsbereichdrehmomentabschätzmittel (S2) das Drehmoment des Kompressors (3) ferner bezogen auf die physikalische Größe (BLV), die auf eine Luftmenge, die durch den Verdampfer (7) geht, verweist, abschätzt.

17. Klimaanlage für ein Fahrzeug gemäß Anspruch 14, wobei die Klimaanlage ferner ein Fahrzeuggeschwindigkeit (SP) -Erkennungsmittel zum Erfassen einer Fahrzeuggeschwindigkeit (SP) oder zum Bezug auf ihr Signal aufweist, und das Sättigungsbereichdrehmomentabschätzmittel (S3) das Drehmoment des Kompressors ferner bezüglich der Fahrzeuggeschwindigkeit (SP) abschätzt.

18. Klimaanlage für ein Fahrzeug gemäß Anspruch 1, wobei das Sättigungsbereichdrehmomentabschätzmittel (S3) einen bestimmten vorbestimmten Wert als ein abgeschätztes Drehmoment verwendet.

19. Klimaanlage für ein Fahrzeug gemäß Anspruch 1, wobei das Sättigungsbereichdrehmomentabschätzmittel (S3) durch Verwenden eines Drehmomentabschätzspeicherabbilds, in dem ein abgeschätztes Drehmoment bezüglich einer Außenlufttemperatur (Tamb), einer Motordrehzahl (NC), oder einer Fahrzeuggeschwindigkeit (SP) vorbestimmt ist, zu einer Drehmomentabschätzung führt.

20. Klimaanlage für ein Fahrzeug gemäß Anspruch 1, wobei eine Information über eine berechnete Drehmomentabschätzung zu einer Motorsteuerungseinheit (S6) gesendet wird.

**Revendications**

1. Climatiseur pour un véhicule (1) comprenant au moins un circuit de réfrigération (2) qui comporte un compresseur à déplacement variable (3) dont le déplacement peut varier pendant le refoulement du réfrigérant et qui utilise un moteur (100) comme moyen d'entrainement, un condenseur (4) du réfrigérant, un évaporateur (7) du réfrigérant, des moyens de réglage du déplacement émettant un signal de commande (20) du déplacement du compresseur (3), des moyens de calcul du couple du compresseur qui calculent le couple du compresseur (3), ces moyens de calcul du couple du compresseur comportant au moins deux moyens d'évaluation du couple à savoir, des moyens d'évaluation (S3) d'un couple (Trq2) dans une zone de saturation correspondant à un cas dans lequel le compresseur (3) est actionné avec un déplacement de refoulement maximum, et des moyens d'évaluation (S2) d'un couple (Trq1) dans une zone à déplacement commandé correspondant à un cas dans lequel le compresseur (3) est actionné avec un déplacement de refoulement autre que le déplacement de refoulement maximum,
**caractérisé en ce que**
les moyens de calcul du couple du compresseur comportent des moyens de correction (S9) pour ajouter une correction (Ca) correspondant au délai de réponse du compresseur (3), et au cycle de réfrigération, au calcul du couple du compresseur lorsqu'est détectée une modification de la vitesse de rotation du moteur (Acc) supérieure à une valeur prédéfinie (Accset).

2. Climatiseur pour véhicule conforme à la revendication 1, dans lequel les moyens de correction (S9) lisent un coefficient de correction (Ca) pour le calcul du couple du compresseur à partir d'une carte qui est faite en avance en utilisant un taux de variation de la vitesse de rotation qui correspond à la différence entre la vitesse de rotation immédiatement avant un instant où la vitesse de rotation du moteur (100) varie et la vitesse de rotation à l'instant où la vitesse de rotation du moteur (100) a été modifiée, après écoulement d'un temps d'échantillonnage prédéfini, et un coefficient de correction (Ca) prédéterminé en fonction du taux de variation de la vitesse de rotation, en tant que paramètres, et ajoutent cette correction basée sur la lecture du coefficient de correction (Ca).

3. Climatiseur pour un véhicule conforme à la revendication 2, dans lequel la carte est réalisée sous la forme d'une carte dans laquelle plusieurs lignes caractéristiques déterminant chacune une relation entre le taux de variation de la vitesse de rotation (Acc) et le coefficient de correction (Ca) sont réglées sélectivement en utilisant en outre la charge du circuit de réfrigération en tant que paramètre.

4. Climatiseur pour un véhicule conforme à la revendication 3, dans lequel la charge du circuit de réfrigération utilisée comme paramètre est la température de l'air extérieur (Tamb).

5. Climatiseur pour un véhicule conforme à la revendication 3, dans lequel la charge du circuit de réfrigération utilisée comme paramètre est la pression (Pa) du côté haute pression du circuit de réfrigération.

6. Climatiseur pour un véhicule conforme à la revendication 1, dans lequel la plus petite valeur parmi les valeurs calculées par les moyens d'estimation du couple (S3) dans la zone de saturation et par les moyens d'estimation du couple (S2) dans la zone à déplacement commandé (S2) est sélectionnée en tant qu'évaluation du couple (S6).

7. Climatiseur pour un véhicule conforme à la revendication 1, comprenant en outre des moyens de détection de la vitesse de rotation (Nc) du moteur (100) pour détecter la vitesse de rotation du moteur (100) du véhicule ou faire référence à son signal, des moyens de détection de la température de l'air extérieur pour détecter la température de l'air extérieur (Tamb), et des moyens de détection haute pression pour détecter la pression du réfrigérant du côté haute pression (Pa), le compresseur (3) étant un compresseur à déplacement variable susceptible de commander un déplacement de refoulement (EMPCV), les moyens d'évaluation (S2) du couple dans la zone à déplacement commandé évaluant le couple du compresseur (3) à partir d'au moins le signal de commande du déplacement (EMPCV), la pression du réfrigérant du côté haute pression (Pd), la température de l'air extérieur (Tamb) et la vitesse de rotation du moteur (Nc), et ajoutant une correction (Ca) déterminée par les moyens de correction au calcul du couple du compresseur.

8. Climatiseur pour un véhicule conforme à la revendication 7, comprenant en outre des moyens pour détecter une grandeur physique (Vcond) liée à la quantité d'air passant au travers du condenseur (4) et les moyens d'évaluation du couple dans la zone à déplacement commandé (S2) évaluant le couple du compresseur en se référant en outre à la grandeur physique (Vcond) liée à la quantité d'air passant au travers du condenseur (4).

**9.** Climatiseur pour un véhicule conforme à la revendication 7, comprenant en outre des moyens pour détecter une grandeur physique (BLV) liée à la quantité d'air passant au travers de l'évaporateur (7) et les moyens d'estimation de couple dans la zone à déplacement commandé (S2) évaluant le couple du compresseur en se référant en outre à la grandeur physique (BLV) liée à la quantité d'air passant au travers de l'évaporateur (7).

**10.** Climatiseur pour un véhicule conforme à la revendication 7, comprenant en outre des moyens d'identification de la vitesse de déplacement du véhicule (Sp) pour détecter la vitesse de déplacement du véhicule ou faire référence à son signal, et les moyens d'évaluation du couple dans la zone à déplacement commandé (S2) évaluant le couple du compresseur en se référant en outre à la vitesse de déplacement du véhicule (Sp).

**11.** Climatiseur pour un véhicule conforme à la revendication 1, comprenant en outre des moyens de détection de la vitesse de rotation (Nc) du moteur pour détecter la vitesse de rotation du moteur (100) du véhicule ou faire référence à son signal, des moyens d'identification de la vitesse de déplacement (Sp) du véhicule pour détecter la vitesse de déplacement du véhicule ou faire référence à son signal, des moyens de détection de la température de l'air extérieur (Tamb) pour détecter la température de l'air extérieur, et des moyens de détection haute pression (Pd) pour détecter la pression du réfrigérant du côté haute pression, le compresseur (3) étant un compresseur à déplacement variable susceptible de commander le déplacement de refoulement (EMPCV), et les moyens d'évaluation (S2) du couple dans la zone à déplacement commandé évaluant la puissance du compresseur (3) au moins à partir du signal de commande du déplacement (EMPCV), de la pression du réfrigérant du côté haute pression (Pd), de la vitesse de déplacement (Sp) du véhicule et de la température de l'air extérieur (Tamb), évaluant le couple du compresseur à partir de la vitesse de rotation (Nc) du moteur et de la puissance du compresseur évaluée et ajoutant une correction (Ca) déterminée par les moyens de correction au calcul du couple du compresseur.

**12.** Climatiseur pour un véhicule conforme à la revendication 11, comprenant en outre des moyens pour détecter une grandeur physique (Vcond) liée à la quantité d'air passant au travers du condenseur (4) et les moyens d'évaluation (S2) de couple dans la zone à déplacement commandé évaluent la puissance du compresseur (3) en se référant en outre à la grandeur physique (Vcond) liée à la quantité d'air passant au travers du condenseur (4) et évaluant le couple du compresseur (3) à partir de la vitesse de rotation (Nc) du moteur et de la puissance du compresseur évaluée.

**13.** Climatiseur pour un véhicule conforme à la revendication 11, comprenant en outre des moyens pour détecter une grandeur physique (BLV) liée à la quantité d'air passant au travers de l'évaporateur (7) et les moyens d'évaluation du couple dans la zone à déplacement commandé (S2) évaluant la puissance du compresseur en se référant en outre à la grandeur physique (BLV) liée à la quantité d'air passant au travers de l'évaporateur (7) et évaluant le couple du compresseur (3) à partir de la vitesse de rotation (Nc) du véhicule et de la puissance du compresseur évaluée.

**14.** Climatiseur pour un véhicule conforme à la revendication 1, comprenant en outre des moyens de détection de la vitesse de rotation du moteur (100) pour détecter la vitesse de rotation (Nc) du moteur du véhicule ou faire référence à son signal, et des moyens de détection (Tamb) de la température de l'air extérieur pour détecter la température de l'air extérieur, et les moyens d'évaluation du couple dans la zone de saturation (S3) évaluant le couple du compresseur (3) à partir d'au moins la température de l'air extérieur (Tamb) et la vitesse de rotation (Nc) du moteur et ajoutant une correction (Ca) déterminée par les moyens de correction au calcul du couple du compresseur.

**15.** Climatiseur pour un véhicule conforme à la revendication 14, comprenant en outre des moyens pour détecter une grandeur physique (Vcond) liée à la quantité d'air passant au travers du condenseur (4) et les moyens d'évaluation du couple dans la zone de saturation (S3) évaluent le couple du compresseur (3) en se référant en outre à la grandeur physique (Vcond) liée à la quantité d'air passant au travers du condenseur (4).

**16.** Climatiseur pour un véhicule conforme à la revendication 14, comprenant en outre des moyens pour détecter une grandeur physique (BLV) liée à la quantité d'air passant au travers de l'évaporateur (7) et les moyens d'évaluation du couple dans la zone de saturation (S2) évaluant le couple du compresseur (3) en se référant en outre à la grandeur physique (BLV) liée à la quantité d'air passant au travers de l'évaporateur (7).

**17.** Climatiseur pour un véhicule conforme à la revendication 14, comprenant en outre des moyens d'identification (Sp) de la vitesse de déplacement du véhicule pour détecter la vitesse de déplacement (Sp) du véhicule ou faire référence à son signal, et les moyens d'évaluation du couple dans la zone de saturation (S3) évaluent le couple du compresseur en se référant en outre à la vitesse de déplacement (Sp) du véhicule.

**18.** Climatiseur pour un véhicule conforme à la revendication 1, dans lequel les moyens d'évaluation du couple dans la zone de saturation (S3) utilisent une valeur prédéterminée comme évaluation du couple.

**19.** Climatiseur pour un véhicule conforme à la revendication 1, dans lequel les moyens d'évaluation du couple dans la zone de saturation (S3) effectuent une évaluation du couple en utilisant une carte d'évaluation de couple dans laquelle l'évaluation du couple est prédéterminée par rapport à la température de l'air extérieur (Tamb), de la vitesse de rotation (Nc) du moteur ou de la vitesse de déplacement (Sp) du véhicule.

**20.** Climatiseur pour un véhicule conforme à la revendication 1, dans lequel une information d'une évaluation d'un couple calculée est transmise à une unité de commande du moteur (S6).

# FIG. 1

EP 2 206 617 B1

# FIG. 2

PRESSURE DIFFERENCE BETWEEN DISCHARGED
REFRIGERANT AND SUCKED REFRIGERANT (ΔPdPs)

# FIG. 3

heat radiation ability
at air side of condenser
: great

heat radiation ability
at air side of condenser
: small

PRESSURE DIFFERENCE BETWEEN DISCHARGED
REFRIGERANT AND SUCKED REFRIGERANT (ΔPdPs)

# FIG. 4

# FIG. 5

# FIG. 6

```
                          ┌──────────────┐
                          │    start     │
                          └──────┬───────┘
                                 │
  S1 ─┐               ╱──────────▼──────────╲        No
      └──────────────<    air conditioner     >──────────┐
                      ╲        ON ?          ╱            │
                       ╲──────────┬─────────╱             │
  S2 ─┐                           │ Yes                   │
      │   ┌───────────────────────▼───────────────────────┐
      └───│ calculation of displacement control region torque estimate Trq1 │
          │     Trq1 = f(EMPCV,Tamb,Nc,SP,Vcond,Pd,BLV)    │
          └───────────────────────┬───────────────────────┘
                                  │
          ┌───────────────────────▼───────────────────────┐
          │  calculation of saturation region torque estimate Trq2 │
          │     Trq2 = f(Tamb,Nc,SP,Vcond,Pd,BLV)          │
          └───────────────────────┬───────────────────────┘
  S3 ─┘                           │
                        ╱─────────▼─────────╲      No
                       <   Trq1 ≧ Trq2 ?      >──────────────────────────┐
                        ╲─────────┬─────────╱                            │
  S4 ─┘                           │ Yes                        S7 ─┐     │
                                  │                                ╱─────▼─────╲    No
                                  │                               <  Acc ≦ Accset ? >──────────────┐
                                  │                                ╲─────┬─────╱                   │
                                  │                                      │ Yes              S9 ─┐  │
                                  │                                      │       ┌──────────────▼──▼──────────┐
                                  │                                      │       │ reading of correction coefficient Ca from map │
                                  │                                      │       └──────────────┬─────────────┘
                                  │                                      │       ┌──────────────▼─────────────┐
                                  │                                      │       │    calculation of torque estimate Trq3 │
                                  │                                      │       │ in engine rotational speed rapid change region │
                                  │                            S8 ─┐     │       │ Trq3 = f(EMPCV,Tamb,Nc,SP,Vcond,Pd,BLV,Ca) │
                                  │                                │     │       └──────────────┬─────────────┘  S10
          S5 ─┐     ┌────────────▼──────┐        ┌───────────────▼────┐       ┌───────────────▼────┐
              └─────│ estimation of torque estimate Trq │  │ estimation of torque estimate Trq │  │ estimation of torque estimate Trq │
                    │      Trq = Trq2      │        │      Trq = Trq1      │       │      Trq = Trq3      │
                    └──────────┬───────────┘        └──────────┬──────────┘       └──────────┬──────────┘
                               │                               │                             │  S11
                               └──────────────────────────────┴─────────────────────────────┘
                               │
          S6 ─┐   ┌────────────▼──────────┐
              └───│ communication of torque estimate │
                  │      to engine ECU      │
                  └─────────────────────────┘
```

# FIG. 7

CORRECTION COEFFICIENT Ca

···· outside air temperature 40℃
−·−· outside air temperature 35℃
−− outside air temperature 30℃
—— outside air temperature 25℃

ROTATIONAL SPEED CHANGE RATE Acc

# FIG. 8

at time when engine rotational speed is elevated

—— measured torque value
−·−·− torque estimate
        (no correction)
−··−·· torque estimate
        (corrected)
−−−− rotational speed

TORQUE [Nm]

ROTATIONAL SPEED [rpm]

EXPIRED TIME

# FIG. 9

at time when engine rotational speed is lowered

# FIG. 10

(A)

(B)

**EP 2 206 617 B1**

**Patent documents cited in the description**

- JP 11291751 A
- JP 2001347828 A
- JP 2006001505 A
- JP 2004211663 A
- EP 1609642 A1